# EUROPEAN PATENT SPECIFICATION

(11) **EP 2 634 159 B1**
(45) Date of publication and mention of the grant of the patent: **21.04.2021**
(21) Application number: 13156335.5
(22) Date of filing: 22.02.2013
(51) Int. Cl.: C04B 35/573, C04B 35/80, F16D 69/02

(54) **Carbon-fiber-reinforced silicon-carbide-based composite material**
Kohlenstofffaserverstärktes siliciumkarbidbasiertes Verbundstoffmaterial
Matériau composite à carbure de silicium renforcé par fibre de carbone

(30) Priority: 29.02.2012 JP 2012042732; 16.01.2013 JP 2013005055
(43) Date of publication of application: 04.09.2013
(60) Divisional application: 17180714.2
(73) Proprietor: CoorsTek KK, Tokyo 141-0032 (JP)
(72) Inventor: Aonuma, Shinichiro, Kanagawa, 257-8566 (JP); Enomoto, Koji, Kanagawa, 257-8566 (JP); Kobayashi, Yoshio, Kanagawa, 257-8566 (JP); Machida, Koh-ichi, Kanagawa, 257-8566 (JP); Anan, Tsutomu, Kanagawa, 257-8566 (JP)
(74) Representative: Hoffmann Eitle

(56) References cited:
- EP-A1- 1 645 671
- EP-A2- 1 084 997
- EP-A2- 1 930 619
- DE-A1- 19 962 548
- US-B1- 6 666 310

## Description

### BACKGROUND OF THE INVENTION

### Field of the Invention

The present invention relates to a silicon-carbide-based composite material in which a silicon-carbide ceramic is reinforced with carbon fibers.

### Description of the Related Art

A disc brake is a type of a brake mechanism and is mainly used for a railroad vehicle, an automobile, a bicycle, etc. It is arranged that the brake disc which rotates together with a wheel is sandwiched by brake pads at both sides to generate frictional force, convert kinetic energy into thermal energy, and brake it. A steel material, such as stainless steel, chromium steel, etc., is used for the brake disc for a railroad vehicle, an automobile, etc.

In recent years, however, it has been required to reduce body weight or weight under springs in order to improve roadability or fuel consumption, and it has been considered to replace the steel material for the brake disc with a material lighter than the steel material.

One example of such a material is a silicon-carbide-based ceramic which attracts attention since it is lightweight and has high strength. However, a conventional silicon-carbide ceramic is a brittle material, does not have toughness, and does not have sufficient properties to apply to the brake disc which is subjected to impact force.

Then, in order to obtain a silicon-carbide ceramic material having high damage tolerance, it is considered to use a composite material including a carbon fiber or a silicon-carbide fiber. Further, as a method for obtaining the silicon-carbide ceramic composite material which is more excellent in oxidation resistance, a method is known in which a silicon carbide is impregnated with fused silicon.

For example, Japanese Patent Application Publication (KOKAI) No. 2007-39319 (Patent Document 1) discloses a silicon-carbide-based composite material reinforced with pitch-based carbon short fibers which are two-dimensionally and randomly oriented in order to improve tensile strength.

However, the silicon-carbide-based composite material described in Patent Document 1 is a carbon-fiber-reinforced carbon composite material in which a laminate of carbon short fiber sheets impregnated with resin and/or pitch is further impregnated with silicon, so that layer-like silicon is likely to exist between the above-mentioned carbon short fiber sheets, and a crack may extend. Thus, the strength and toughness as a whole may not be sufficient. Further, the above-mentioned carbon short fibers which are raveled and/or dispersed are intertwined, so that a porosity of the above-mentioned carbon-fiber-reinforced carbon composite material is high, an area in contact with the impregnated silicon increases, silicification of the fibers tends to proceed, and there are concerns about the reduction in fracture toughness.

EP 1 930 619 A2 (Patent Document 2) relates to polymer-bonded fiber layers, which have an average length measured in the fiber
direction between 3 mm and 50 mm and an average bundle thickness measured vertical to the fiber direction between 0.1 mm and 10 mm, and in which at least 75 percent of all polymer-bonded fiber layers have a length that is at least 90% and not more than 110% of the mean length.

DE 199 62 548 A1 (Patent Document 3) is directed to a method for the production of a fiber-reinforced composite ceramic, the method comprising the steps of impregnating fiber bundles with pyrolyzed binders and solidifying the binders; mixing the impregnated bundle with carbon fillers and phenol resins dissolved in solvents; filling the mixture into a mold; partially drying; pressing the mixture at elevated temperature to form a porous pressed part; carbonizing to form a preform; and infiltrating with liquid silicon forming a SiC matrix.

### SUMMARY OF THE INVENTION

The present invention arises in order to solve the above-mentioned technical problems and aims at providing a carbon-fiber-reinforced silicon-carbide-based composite material which has better strength and toughness, and a braking material, such as a brake disc using the composite material.

The carbon-fiber-reinforced silicon-carbide-based composite material in accordance with the present invention is provided with a bundle of fibers having chopped carbon fibers arranged in parallel and the other carbon component, carbon, silicon, and silicon carbide, the above-mentioned fiber bundle is flat, its cross-section perpendicular to its longitudinal direction has a larger diameter of 1 mm or more, a ratio of the larger diameter to a smaller diameter is from 1.5 to 5, and a plurality of the above-mentioned fiber bundles are randomly oriented substantially along a two-dimensional plane, and said fiber bundles may partly include those whose longitudinal directions incline from said two-dimensional plane in a depth direction or those which are bent,
said chopped carbon fibers have a diameter of from 7 µm to 15 µm and a length of from 4 mm to 14 mm, and a distance between adjacent chopped carbon fibers is from 1 µm to 20 µm at the cross-section perpendicular to the longitudinal direction of said fiber bundle, and
in an arbitrary section perpendicular to said two-dimensional plane, a ratio of an area occupied by said chopped carbon fibers to the section is from 30% to 45%, a ratio of an area occupied by silicon carbide to the section is from 40% to 59%, and the remainder is of silicon and carbon components other than said chopped carbon fibers.

According to such a structure, it is possible to provide the carbon-fiber-reinforced silicon-carbide-based composite material which has improved strength and toughness.

The above-mentioned chopped carbon fiber has a diameter of from 7 µm to 15 µm and a length of from 4 mm to 14 mm, and a distance between adjacent chopped carbon fibers is from 1 µm to 20 µm at the cross-section perpendicular to the longitudinal direction of the above-mentioned fiber bundle.

According to such a structure, in case a crack takes place in the composite material, it is possible to effectively prevent the crack from extending.

Further, in an arbitrary section perpendicular to the above-mentioned two-dimensional plane, a ratio of an area occupied by the above-mentioned chopped carbon fibers to the section is from 30% to 45%, a ratio of an area occupied by silicon carbide to the section is from 40% to 59%, and the remainder is of silicon and carbon components other than the above-mentioned chopped carbon fibers.

Since the ratios of carbon fiber and silicon carbide present in the above-mentioned composite material are in the above-mentioned ranges, it is possible to improve strength and toughness and to reliably inhibit the crack from extending to the inside of the composite material.

Furthermore, it is preferable that the above-mentioned fiber bundle includes a first fiber bundle having a length of from 4 mm to 8 mm and a second fiber bundle having a length of from 10 mm to 14 mm, and an area ratio between the above-mentioned first fiber bundle and the above-mentioned second fiber bundle is within a range of from 9:1 to 7:3 at an arbitrary section along the above-mentioned two-dimensional plane.

As such, by mixing the two types of fiber bundles which are different in length, it is possible to prevent frequent uneven distribution of gaps, silicon, and silicon carbide which may initiate a crack to be caused by an expanding gap between the fiber bundles because of too long fiber bundles, so that generation of the crack can be suppressed, the pull out effect of the long fiber bundle can also be provided efficiently, and the fracture toughness of the whole composite material can be further improved.

Furthermore, in a surface layer between at least 500 µm and maximum 4000 µm in depth from the surface, a total content of the above-mentioned silicon carbide and the silicon carbide resulting from silicifying the chopped carbon fibers and the other carbon component is preferably from 50% by weight to 80% by weight.

Since the main component of the surface layer is silicon carbide generated by silicification, it is possible to provide the material which is excellent in strength and fracture toughness, and further excellent in oxidation resistance and thermal shock resistance.

Furthermore, a braking material may employ the above-mentioned carbon-fiber-reinforced silicon-carbide-based composite material, and at least one of two-dimensional sides of the above-mentioned surface layer serves as a braking side.

Provision of such a braking material can inhibit the crack from extending to the inside of the composite material in case the crack takes place in the braking side, and it is possible to provide the braking material which is excellent in durability and friction coefficient persistence. Especially, in the case where it is used as the braking material, it is possible to save energy because of its light weight.

According to the present invention, it is possible to provide the carbon-fiber-reinforced silicon-carbide-based composite material which is excellent in strength and toughness.

Therefore, the above-mentioned composite material can be suitably used as a structural material. Furthermore, since it is also excellent in slidability, oxidation resistance, and abrasion resistance, it can also be used suitably for the braking material, such as a brake disc material which is lightweight and has high strength.

### BRIEF DESCRIPTION OF THE DRAWING

FIG. 1 is a schematic sectional view of a carbon-fiber-reinforced silicon-carbide-based composite material in accordance with the present invention.
FIG. 2 is a sectional view along line A-A of FIG. 1.
FIG. 3 is a schematic cross-sectional view perpendicular to a longitudinal direction of one fiber bundle.
FIG. 4 is a schematic view showing distances among chopped carbon fibers.

### DESCRIPTION OF THE PREFERRED EMBODIMENTS

Hereinafter, the present invention will be described in detail with reference to the drawings.

A carbon-fiber-reinforced silicon-carbide-based composite material in accordance with the present invention is provided with a bundle of fibers having chopped carbon fibers arranged in parallel and the other carbon component, carbon, silicon, and silicon carbide, in which the fiber bundle is flat, its cross-section perpendicular to its longitudinal direction has a larger diameter (length) of 1 mm or more, a ratio of the larger diameter to a smaller diameter (breadth) is from 1.5 to 5 (inclusive), and a plurality of the above-mentioned fiber bundles are randomly oriented substantially along a two-dimensional plane.

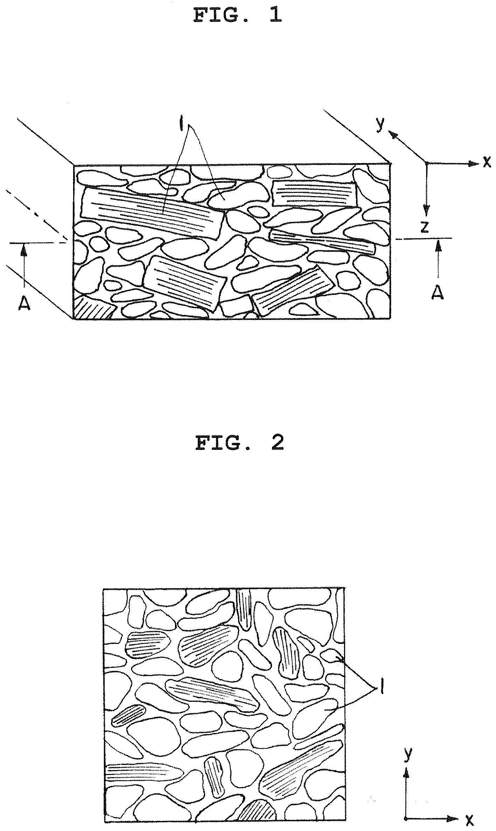

FIG. 1 shows a schematic sectional view of the carbon-fiber-reinforced silicon-carbide-based composite material in accordance with the present invention. In FIG. 1, a plurality of fiber bundles 1 which constitute the composite material in accordance with the present invention are randomly oriented substantially along the two-dimensional plane where x-axis and y-axis lie.

Further, "substantially" of "a plurality of...substantially along a two-dimensional plane" is not meant that all fiber bundles are arranged along the two-dimensional plane i.e. completely in one plane but, as shown in FIG. 1, the above-mentioned fiber bundles may partly include those whose longitudinal directions incline from the plane (where x, y axes lie) in a depth direction (z-axis) in the drawing or those which are bent.

A sectional view of the composite material along line A-A of FIG. 1 is shown in FIG. 2. As shown in FIG. 2, by "randomly oriented along a two-dimensional plane" is meant that all the longitudinal directions of the fiber bundles 1 in an arbitrary x-y plane in FIG. 1 are not arranged unidirectionally, but the above-mentioned longitudinal directions are randomly arranged.

A structure where a plurality of the above-mentioned fiber bundles are randomly oriented substantially along the two-dimensional plane has an intermediate structure between a conventional structure in which carbon fiber sheets are laminated and a structure in which carbon fibers are not oriented (three dimensionally random) . Such two-dimensional random orientation allows a high packing density of the fiber bundles compared to the case where the carbon fibers are made into a sheet or a textile or not oriented (three dimensionally random), thus improving the effect of preventing fracture to be caused by expansion of a crack generated on a surface of the composite material.

The fibers woven in the shape of a sheet tend to break when firing in the case of manufacturing, since a gap tends to take place between sheets etc. Further, at the time of impregnating silicon, silicon tends to penetrate into the gap, and the strength is reduced. Especially, when the composite material is used as a braking material, it is likely to cause exfoliation between the layers.

Furthermore, in the case where the carbon fibers are oriented only in one direction in an arbitrary plane, the composite material tends to crack in its longitudinal direction.

On the other hand, since such two-dimensional random orientation seldom allows the exfoliation between the layers or the crack in the longitudinal direction of the fiber to take place, it is possible to aim at improving and equalizing the strength over the whole composite material.

It should be noted that since heat tends to be conducted in the longitudinal direction of the fiber in the fiber-reinforced composite material, the heat conductivity increases along the direction in which a degree of fiber orientation is high. For this reason, according to design specifications of a structure material etc., the orientation of the fiber may be adjusted for adjustment of heat conduction direction.

Since the carbon-fiber-reinforced silicon-carbide-based composite material in accordance with the present invention is such that a plurality of fiber bundles are randomly oriented substantially along the two-dimensional plane, two-dimensional thermal conductivity and perpendicular thermal conductivity can be differentiated, and optimal design for a heat dissipation property or thermal stress can be readily carried out.

The above-mentioned fiber bundle includes the chopped carbon fibers and the other carbon components, and the above-mentioned chopped carbon fibers are arranged in parallel with the longitudinal direction to provide the fiber bundle in the shape of a bunch.

The carbon fibers of the reinforcing fibers are made into such a bundle of chopped carbon fibers and therefore can be easily distributed in the composite material uniformly. Even in the case where the fiber-reinforced composite material is subjected to impacts to cause a crack on a surface, the stress is dispersed in the above-mentioned fiber bundle, the expansion of the crack is inhibited, and it is possible to prevent the whole composite material from fracturing.

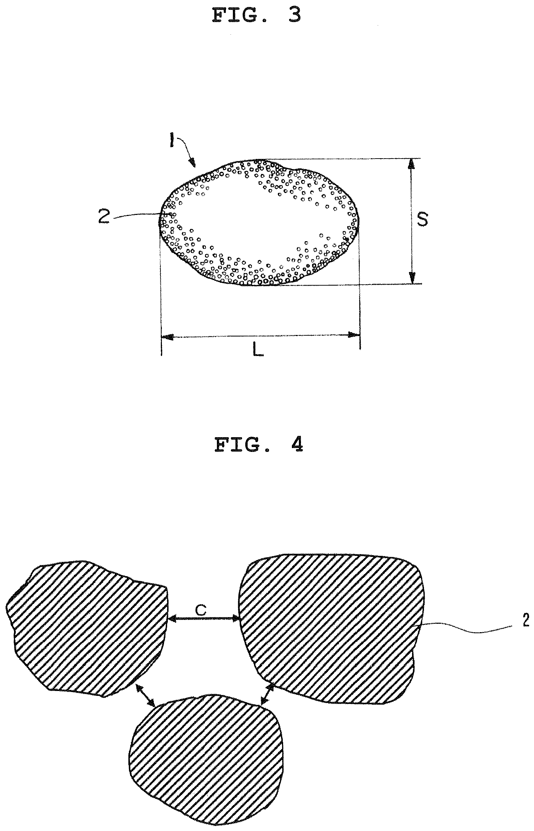

FIG. 3 shows a schematic cross-sectional view perpendicular to a longitudinal direction of one of the above-mentioned fiber bundles. As shown in FIG. 3, one fiber bundle 1 is flat, its cross-section has a larger diameter of 1 mm or more, a ratio of the larger diameter L to a smaller diameter S is from 1.5 to 5 (inclusive).

Since the cross-sectional shape perpendicular to the longitudinal direction of the fiber bundle is flat as described above, it is possible to further increase the packing density of the fiber bundle, and aim at improving the effect of inhibiting expansion of the crack caused on the surface.

In the case where the above-mentioned L/S ratio is less than 1.5, the cross-sectional shape of the fiber becomes close to a true circle, and the packing density becomes low. On the other hand, in the case where the ratio exceeds 5, it is too flat and the length of the smaller diameter is insufficient, thus being difficult for the fiber bundle to fully inhibit the expansion of the crack.

As for the above-mentioned chopped carbon fiber, its diameter is from 7 µm to 15 µm (inclusive) and its length is from 4 mm to 14 mm (inclusive).

By setting the diameter to 7 µm or more, it is possible to prevent the expansion of the crack in a perpendicular direction (diametrically) with respect to the longitudinal direction of the chopped carbon fiber. Further, by setting the diameter to 15 µm or less, it is possible to disperse shock stress in the longitudinal direction of the chopped carbon fibers, since a number of the fibers per volume is sufficient.

Further, by setting the length to 4 mm or more, a pull out length is secured more appropriately and the effect of preventing the toughness from decreasing is improved. By setting the length to 14 mm or less, the packing density of the fiber bundle is secured more appropriately and the crack is less likely to expand in the gap between fiber bundles.

Therefore, if the chopped carbon fibers have such a diameter and length, then it is, as a result, possible to improve the effect as the reinforcing material.

Further, in the cross-section perpendicular to the longitudinal direction of the above -mentioned carbon fiber bundle, it is preferable that a distance between adjacent chopped carbon fibers is from 1 µm to 20 µm (inclusive).

FIG. 4 shows a schematic enlarged view of the cross-section perpendicular to the longitudinal direction between carbon fibers.

Let the distance between adjacent chopped carbon fibers be C as shown in FIG. 4, when C is 1 µm or more, the chopped carbon fibers which constitute the fiber bundle are not too dense. Further, since the pull out of the fiber is likely to be produced with respect to the stress caused by the crack generating in the composite material, it is easy to obtain sufficient durability. Furthermore, by setting C to 20 µm or less, it is possible to reduce the probability that the cracks expands among the chopped carbon fibers and the expansion of the cracks can be inhibited more reliably.

As for the above-mentioned composite material, in an arbitrary section perpendicular to the two dimensional plane in which the above-mentioned fiber bundles are oriented, a ratio of an area occupied by the above-mentioned chopped carbon fibers to the section is from 30% to 45% (inclusive), a ratio of an area occupied by silicon carbide to the section is from 40% to 59% (inclusive), and the remainder is of silicon and carbon components other than the above-mentioned chopped carbon fibers.

By setting the ratio of the area occupied by the above-mentioned chopped carbon fibers to 30% or more, the chopped carbon fibers can inhibit the expansion of the crack more reliably, and the toughness of the composite material is further improved. Further, the area ratio of 45% or less does not cause the carbon fibers to be excessive, and it is easy to secure the strength.

Furthermore, by setting the ratio of the area occupied by silicon carbide to 40% or more, the strength reduction of the composite material can be appropriately inhibited. Still further, by setting the ratio of the area occupied by silicon carbide to 59% or less, it is possible to improve the toughness reduction of the composite material caused by fragile silicon carbide and reduce the influence of the crack expansion.

It should be noted that the remainder consists of silicon and carbon components other than the above-mentioned chopped carbon fibers. Of these, the silicon content is preferably as low as possible, since silicon is fragile, reduces the toughness, and causes the expansion of the crack.

Furthermore, it is preferable that the above-mentioned fiber bundle includes a first fiber bundle having a length of from 4 mm to 8 mm (inclusive) and a second fiber bundle having a length of from 10 mm to 14 mm (inclusive), and an area ratio between the above-mentioned first fiber bundle and the above-mentioned second fiber bundle is within a range of from 9:1 to 7:3 at an arbitrary section along the above-mentioned two-dimensional plane.

If the above-mentioned fiber bundles are too long, the gap between the fiber bundles becomes large and the crack is likely to extend into the gap. On the other hand, mixing comparatively shorter fiber bundles and longer fiber bundles as described above allows the efficient pull out effect, and it is possible to improve the fracture toughness of the whole composite material.

Furthermore, in a surface layer between at least 500 µm and maximum 4000 µm in depth from the surface, a total content of the above-mentioned silicon carbide and the silicon carbide resulting from silicifying the chopped carbon fibers and the other carbon component is preferably from 50% by weight to 80% by weight.

As described above, since the main component of the surface layer of the above-mentioned composite material is made of silicon carbide generated by silicification, not only it is excellent in strength and fracture toughness, but also it is possible to improve the oxidation resistance at the surface layer and constitute a material excellent in thermal shock resistance.

By setting the depth of the above-mentioned surface layer to 500 µm or more, the oxidation resistance of the surface layer becomes more reliable. By setting the depth to 4000 µm or less, the stress caused by a thermal expansion coefficient difference between the surface layer and a region deeper than the surface layer may not be excessive, and a possibility that the whole composite material may break is reduced.

Further, by setting the silicon carbide content in the above-mentioned surface layer to 50% by weight or more, it is possible to secure more reliable oxidation resistance. By setting it to 80% by weight or less, the influence of the toughness reduction caused by silicon carbide is controlled to be lower.

It is preferable that the chopped carbon fiber and the other carbon components are silicified by impregnating silicon to produce the silicon carbide of the above-mentioned surface layer.

The thus produced silicon carbide is unlikely to generate deformation or crack to be caused by the thermal expansion coefficient difference between the components at the time of manufacturing the composite material, that is preferred.

Such a composite material can be obtained in such a way that a mixture of the fiber bundle provided with the chopped carbon fibers, a binder which generates a carbon component by heating decomposition, and silicon carbide powder are subjected to hot compression molding, then fired, and the thus obtained sintered body is impregnated with fused silicon.

Conventional materials can be used for the above-mentioned binder, dispersant, etc. in the manufacture of the conventional carbon-fiber-reinforced silicon-carbide composite material. As examples of the above-mentioned binder there may be mentioned a phenol-based resin, a furan-based resin, an aromatic alcohol, etc. As examples of the above-mentioned dispersant there may be mentioned ethanol, water, etc.

Further, in the case of manufacturing the composite material in which the silicon carbide (generated by silicification) content is high in the surface layer, the above-mentioned resin (whose type or concentration is varied) to be mixed to the fiber bundles of the chopped carbon fibers is used as a component material of the surface layer and subjected to processes of molding, firing, and impregnation similarly to the above, so that the above-mentioned silicon carbide contents may be different in the surface layer and its inside.

It should be noted that a load is applied to the fiber bundle contained in the above-mentioned composite material in a softened state in the material mixing process and the molding process at the time of the above-mentioned manufacture, to thereby allow the two-dimensional random orientation, and the cross-section perpendicular to its longitudinal direction of the above-mentioned fiber bundle can also be in a predetermined flat shape. In particular, the composite material in accordance with the present invention can be manufactured according to processes as shown in the following Examples.

Since a two-dimensional side in which the above-mentioned fiber bundles are oriented serves as a braking side, the above-described composite material in accordance with the present invention can be suitably applied to braking materials, such as brake discs for a railroad vehicle, an automobile, etc., particularly.

By means of the above-mentioned fiber bundles, such a braking material absorbs the stress generated when the braking material slides, and disperses the stress two-dimensionally along the plane where they are oriented. Even when a crack takes place in the braking side, the crack is inhibited from extending to the inside of the composite material, and the braking material can provide a good braking performance. Further, the above-mentioned braking material is excellent also in oxidation resistance and thermal shock resistance, and has sufficient abrasion resistance required for the brake disc.

It should be noted that, such an effect is significant in the case where the larger diameter of the flat shape of the cross-section perpendicular to the longitudinal direction of the above-mentioned fiber bundle is arranged to be parallel to the above-mentioned two-dimensional plane.

It is preferable that the above-mentioned braking material has a density of from 2.4 g/cm³ to 2.8 g/cm³ (inclusive), an elastic modulus of from 110 GPa to 176 GPa (inclusive), and a flexural strength of from 150 MPa to 383 MPa (inclusive).

Having such properties provides the braking material which is lightweight but excellent in durability.

Hereinafter, the preferred embodiments of the present invention are described with reference to Examples, however the present invention is not limited to the following Examples.

As shown below, Samples of the carbon-fiber-reinforced silicon-carbide-based composite material are prepared and evaluated. Samples 1, 6, 7, 8, 11, 12 and 15 are for comparison only and outside the scope of the claimed invention.

### [Samples 1 to 5]

Pitch-based chopped carbon fibers (6000 fibers per bunch, a length of 6 mm) were used as fiber bundle materials. The pitch-based chopped carbon fibers were immersed in a sufficient amount of resin material to immerse the pitch-based chopped carbon fibers (where the resin is diluted with ethanol to have a concentration of 50% by weight), and left to stand for 1 hour. Then, the pitch-based chopped carbon fibers impregnated with the resin material were taken out, and dried at 50°C in a drying oven for 300 minutes under pressure, to obtain a fiber bundle including the pitch-based chopped carbon fibers.

Next, a slurry was prepared by mixing 40 parts by weight of the fiber bundles of the pitch-based chopped carbon fibers, 20 parts by weight of silicon carbide powder (BF-15, manufacture by H. C. Starck GmbH), 40 parts by weight of phenol resin, and an appropriate amount of ethanol. This slurry was dried at 50°C for 5 hours, subsequently subjected to hot compression molding at 150°C and 100 N/cm², then subjected to a primary firing process at 1000°C, and subjected to a secondary firing process at 2000°C.

The resulting sintered body was impregnated with silicon at 1600°C under reduced pressure, to produce composite materials in which fiber bundles had larger-diameter / smaller-diameter ratios and were two-dimensionally and randomly oriented as shown in the following Table 1 (see Samples 1 to 5).

### [Sample 6]

Using fiber bundle materials similar to those in Sample 1, pitch-based carbon fibers impregnated with the resin material were dried without applying pressure. The other conditions were similar to those in Samples 1 to 5, and the composite material was produced in which the fiber bundles having a larger diameter / smaller-diameter ratio of 1.0 were three-dimensionally and randomly oriented.

### [Sample 7]

Using pitch-based carbon long fibers as fiber bundle materials, textile sheets were produced and impregnated with an ethanol solution of phenol resin, then dried. After laminating the sheets, through, molding, firing, and impregnation processes similar to those in Samples 1-5, the composite material was produced in which the fiber bundles having a larger diameter / smaller-diameter ratio of 2.0 were two-dimensionally and randomly oriented.

The various following evaluations were carried out for each of Samples produced as described above.

### [Flexural Strength]

A 3 mm × 4 mm × 40 mm specimen was produced from each Sample, three-point flexural strength was measured at a crosshead speed of 0.5 mm/min by a method in compliance with JIS R 1601.

### [Fracture Energy]

Using a diamond blade with a thickness of 0.1 mm, a straight notch with a depth of around 2 mm was formed in the central part of the 3 mm × 4 mm × 40 mm specimen of each Sample, then fracture energy of the specimen was measured by a method in compliance with JCRS 201 in such a way that a distance between fulcrums was set to 30 mm and a crosshead speed of a load point was set to 0.01 mm/min to find fracture work per unit area (J/m²) up to 5% of the maximum load.

These evaluation results are collectively shown in Table 1.

**[Table 1]**

| Samples No. | Fiber type | Fiber bundle | | Flexural strength (MPa) | Fracture energy (J/m²) |
|---|---|---|---|---|---|
| | | Larger-diameter/ smaller-diameter ratio | Orientation | | |
| 1* | Chopped fiber | 1.0 | Two-dimensional random orientation | 138 | 687 |
| 2 | Chopped fiber | 1.5 | Two-dimensional random orientation | 196 | 1587 |
| 3 | Chopped fiber | 2.0 | Two-dimensional random orientation | 221 | 1752 |
| 4 | Chopped fiber | 3.0 | Two-dimensional random orientation | 252 | 1647 |
| 5 | Chopped fiber | 5.0 | Two-dimensional random orientation | 202 | 1347 |
| 6* | Chopped fiber | 1.0 | Three-dimensional random orientation | 142 | 647 |
| 7* | Long fiber | 2.0 | Two-dimensional orientation (textile sheet lamination) | 112 | 1714 |

| | | | | | |
|---|---|---|---|---|---|
| *For comparison only and outside the scope of the claimed invention. | | | | | |

As can be seen from the results shown in Table 1, each of Samples 2-5 has a flexural strength around 200 MPa and fracture energy of around 1500 J/m², while Samples 1 and 6 have flexural strength of 138 to 142 MPa and fracture energy of 647 to 687 J/m². Thus, Samples 2-5 show better values with respect to both the flexural strength and fracture energy.

Further, Sample 7 provides the fracture energy comparable to those of Samples 2-5, but has inferior flexural strength.

From these results, it can be said that the fiber bundles which are flat in cross-section and randomly oriented substantially along the two-dimensional plane provide the effects of the present invention.

It is to be noted that even in the case where composite materials were produced by preparing a slurry in a similar manner as Samples 1 to 5 except that the silicon carbide powder was not added to the fiber bundles of Samples 1 to 5 shown in the above Table 1, flexural strength and fracture energy equal to or greater than those of Samples 1 to 5 were obtained.

### [Samples 8 to 10]

Based on Sample 3 (having a larger diameter of 0.5 µm, a length of 10 mm, a distance between adjacent chopped carbon fibers of 1 µm) produced as described above, composite materials were produced to have larger diameters of the fiber bundles, lengths, and distances between adjacent chopped carbon fibers as shown in the following Table 2 (see Samples 8 to 10). The other conditions were similar to those in Sample 3.

Similarly to the above, each Sample was evaluated for flexural strength and fracture energy. These evaluation results are collectively shown in Table 2.

**[Table 2]**

| Samples No. | Chopped carbon fiber | | | Flexural strength (MPa) | Fracture energy (J/m²) |
|---|---|---|---|---|---|
| | Diameter (µm) | Length (mm) | Distance between chopped carbon fibers (µm) | | |
| 8* | 4 | 2 | 0.5 | 203 | 687 |
| 9 | 7 | 4 | 1 | 197 | 1521 |
| 3 | 10 | 10 | 10 | 202 | 1745 |
| 10 | 15 | 14 | 20 | 205 | 1789 |
| 11* | 20 | 20 | 23 | 138 | 12 |

| | | | | | |
|---|---|---|---|---|---|
| *For comparison only and outside the scope of the claimed invention. | | | | | |

As can be seen from the results shown in Table 2, Samples 9 and 10 provide the flexural strength and fracture energy equivalent to those in Sample 3, but Sample 8 is inferior to Sample 3 in terms of fracture energy and Sample 11 is inferior to Sample 3 both in terms of flexural strength and fracture energy.

Accordingly, in the conditions where the diameter and length of the chopped carbon fiber, and the distance between the chopped carbon fibers are small (Sample 8), a carbon fiber density is small, and the fracture energy decreases. In the conditions where the diameter and length of the carbon fiber and the distance between the carbon fibers are large (Sample 11), it is considered that the carbon fiber density is large and the flexural strength decreases.

### [Samples 12 to 15]

Based on Sample 3 (area ratios of the respective components which occupy the section perpendicular to the above-mentioned two-dimensional plane are 40% for chopped carbon fibers, 50% for silicon carbide, and 10% for silicon and carbon components other than the above-mentioned chopped carbon fibers) produced as described above, composite materials were produced to have the area ratios of the respective components as shown in the following Table 3 (see Samples 12 to 15). The other conditions were similar to those in Sample 3.

In addition, measurement of the area ratios was carried out in such a way that a polarizing filter was mounted on an optical microscope to identify each material in a cross-section of each Sample, the inside of a 100 µm × 100 µm microscopic field was imaged, and the image was analyzed.

Similarly to the above, each Sample was evaluated for flexural strength and fracture energy.

These evaluation results are collectively shown in Table 3.

**[Table 3]**

| Samples No. | Area ratio (%) | | | Flexural strength (MPa) | Fracture energy (J/m²) |
|---|---|---|---|---|---|
| | Chopped carbon fiber | Silicon carbide | Silicon + the other carbon components | | |
| 12* | 25 | 70 | 5 | 202 | 778 |
| 13 | 30 | 59 | 6 | 223 | 1425 |
| 3 | 40 | 50 | 10 | 265 | 1725 |
| 14 | 45 | 40 | 15 | 275 | 2012 |
| 15* | 50 | 35 | 15 | 124 | 1687 |

| | | | | | |
|---|---|---|---|---|---|
| *For comparison only and outside the scope of the claimed invention. | | | | | |

As can be seen from the results shown in Table 3, Samples 13 and 14 provide the flexural strength and fracture energy equivalent to those in Sample 3. Further, Sample 15 is inferior to Sample 3 in terms of flexural strength.

Accordingly, it is shown that the chopped carbon fiber content clearly affects the improvement in toughness (fracture energy) which is a strong point of the fiber and the influence on the strength (flexural strength) which is a weak point.

### [Sample 16]

As the fiber bundle materials, first fiber bundles with a length of from 4 mm to 8 mm (inclusive) and second fiber bundles with a length of from 10 mm to 14 mm (inclusive) were used and mixed together. The area ratio of the above-mentioned first fiber bundles to the above-mentioned second fiber bundles in the section along the above-mentioned two-dimensional plane was 8:2. The other conditions were similar to those in Sample 3. Under these conditions, a composite material was produced.

### [Sample 17]

Fiber bundles were obtained similarly to Sample 3. A slurry was prepared by mixing 15 parts by weight of the fiber bundles, 20 parts by weight of silicon carbide powder (BF-15, manufacture by H. C. Starck GmbH), 40 parts by weight of phenol resin, and an appropriate amount of ethanol.

This slurry used for forming a surface layer of a molding body and the slurry prepared when producing Sample 3 and used for forming the inside (base material) of the molding body rather than the surface layer were subjected to hot compression molding at 150°C and 100 N/cm², then subjected to the primary firing process at 1000°C, and further subjected to the secondary firing process at 2000°C.

Then, the resulting sintered body was impregnated with silicon at 1600°C under reduced pressure, to thereby produce the composite material in which the base material (inside) had a similar composition to that of Sample 3 (silicon carbide content: 35% by weight), and the total content of silicon carbide (obtained by silicifying chopped carbon fiber and carbon component other than the chopped carbon fiber) was 70% by weight in the surface layer from the surface to a depth of 1 mm.

Similarly to the above, Samples 16 and 17 were evaluated for flexural strength and fracture energy.

Further, as for Samples 3 and 17, with reference to JIS R 1609, specimens processed to have dimensions of 9 mm × 12 mm × 120 mm were evaluated for oxidation resistance at 1000°C to find a rate of weight reduction after oxidization.

These evaluation results are collectively shown in Table 4.

**[Table 4]**

| Samples No. | Outline of sample | Flexural strength (MPa) | Fracture energy (J/m²) | Weight reduction rate (%) |
|---|---|---|---|---|
| 3 | Reference | 221 | 1752 | 3.2 |
| 16 | First fiber bundle + second fiber bundle | 232 | 2012 | - |
| 17 | Surface layer: silicon carbide content = 70 wt. % | 241 | 1354 | 0.4 |

As can be seen from the results shown in Table 4, Sample 16 is excellent compared with Sample 3, particularly has a further advantage that fracture energy exceeds 2000 J/m².

Thus, it is shown that, by optimizing the property of the fiber bundle, fracture energy can be improved particularly.

Further, Sample 17 in which the content of the silicon carbide generated by silicification in the surface layer is 70% has a rate of weight reduction by oxidization of as low as 0.4%, and an amount of carbon disappeared due to oxidization is low. Thus, it is considered that oxidation resistance is high.

### [Samples 18 to 21]

Similarly to Sample 17, the total content of silicon carbide (obtained by silicifying chopped carbon fiber and carbon components other than the chopped carbon fiber) in the surface layer from the surface to a depth of 1 mm was as shown in Table 5 (see Samples 18 to 21) . The other conditions were similar to those in Sample 17. Under these conditions, the composite material was produced.

Similarly to the above, each Sample was evaluated for flexural strength and fracture energy.

These evaluation results are collectively shown in Table 5.

**[Table 5]**

| Samples No. | Surface layer: silicon carbide content (%) | Flexural strength (MPa) | Fracture energy (J/m²) |
|---|---|---|---|
| 18 | 45 | 123 | 1789 |
| 19 | 50 | 224 | 1624 |
| 17 20 | 70 | 241 | 1354 |
| | 80 | 244 | 1332 |
| 21 | 85 | 268 | 365 |
| 3 | Reference | 221 | 1752 |

As can be seen from the results shown in Table 5, Sample 18 is inferior to Sample 3 in terms of flexural strength and Sample 21 is inferior to Sample 3 in terms of fracture energy. On the other hand, Samples 19 to 20 are not inferior to Sample 3 both in terms of flexural strength and fracture energy.

Although Table 3 shows changes of the properties of the composite material due to the carbon fiber content, Table 5 shows changes of the properties of the composite material due to the silicon carbide content of the surface layer.

## Claims

1. A carbon-fiber-reinforced silicon-carbide-based composite material, comprising a bundle of fibers having chopped carbon fibers arranged in parallel and the other carbon component, carbon, silicon, and silicon carbide, wherein
said fiber bundle is flat, its cross-section perpendicular to its longitudinal direction has a larger diameter of 1 mm or more, a ratio of the larger diameter to a smaller diameter is from 1.5 to 5, a plurality of said fiber bundles is randomly oriented along a two-dimensional plane, and said fiber bundles may partly include those whose longitudinal directions incline from said two-dimensional plane in a depth direction or those which are bent,
said chopped carbon fibers have a diameter of from 7 µm to 15 µm and a length of from 4 mm to 14 mm, and a distance between adjacent chopped carbon fibers is from 1 µm to 20 µm at the cross-section perpendicular to the longitudinal direction of said fiber bundle, and
in an arbitrary section perpendicular to said two-dimensional plane, a ratio of an area occupied by said chopped carbon fibers to the section is from 30% to 45%, a ratio of an area occupied by silicon carbide to the section is from 40% to 59%, and the remainder is of silicon and carbon components other than said chopped carbon fibers.

2. A carbon-fiber-reinforced silicon-carbide-based composite material as claimed in claim 1, wherein said fiber bundle includes a first fiber bundle having a length of from 4 mm to 8 mm and a second fiber bundle having a length of from 10 mm to 14 mm, and an area ratio between said first fiber bundle and said second fiber bundle is within a range of from 9:1 to 7:3 at an arbitrary section along said two-dimensional plane.

3. A carbon-fiber-reinforced silicon-carbide-based composite material as claimed in claim 1, wherein in a surface layer between at least 500 µm and maximum 4000 µm in depth from the surface, a total content of said silicon carbide and the silicon carbide resulting from silicifying the chopped carbon fibers and the other carbon component is from 50% by weight to 80% by weight.

## Patentansprüche

1. Kohlenstofffaserverstärktes siliciumkarbidbasiertes Verbundstoffmaterial, umfassend ein Faserbündel mit parallel angeordneten geschnittenen Kohlenstofffasern und die andere Kohlenstoffkomponente, Kohlenstoff, Silicium und Siliciumkarbid, wobei
besagtes Faserbündel flach ist, sein Querschnitt senkrecht zu seiner Längsrichtung einen größeren Durchmesser von 1 mm oder mehr aufweist, ein Verhältnis des größeren Durchmessers zu einem kleineren Durchmesser 1,5 bis 5 beträgt, mehrere besagter Faserbündel zufällig entlang einer zweidimensionalen Ebene orientiert sind und besagte Faserbündel teilweise solche einschließen können, deren Längsrichtungen sich von der zweidimensionalen Ebene in eine Tiefenrichtung neigen, oder solche, die gebogen sind,
besagte geschnittene Kohlenstofffasern einen Durchmesser von 7 µm bis 15 µm und eine Länge von 4 mm bis 14 mm aufweisen, und ein Abstand zwischen benachbarten geschnittenen Kohlenstofffasern im Querschnitt senkrecht zur Längsrichtung des besagten Faserbündels 1 µm bis 20 µm beträgt, und
in einem beliebigen Bereich senkrecht zu besagter zweidimensionaler Ebene ein Anteil einer von den geschnittenen Kohlenstofffasern eingenommenen Fläche zu dem Bereich 30% bis 45% beträgt, ein Anteil einer von Siliciumkarbid eingenommenen Fläche zu dem Bereich 40% bis 59% beträgt und der Rest aus anderen Silicium- und Kohlenstoffkomponenten als besagten geschnittenen Kohlenstofffasern besteht.

2. Kohlenstofffaserverstärktes siliciumkarbidbasiertes Verbundstoffmaterial gemäß Anspruch 1, wobei besagtes Faserbündel ein erstes Faserbündel mit einer Länge von 4 mm bis 8 mm und ein zweites Faserbündel mit einer Länge von 10 mm bis 14 mm enthält und ein Flächenverhältnis zwischen besagtem ersten Faserbündel und besagtem zweiten Faserbündel in einem beliebigen Bereich entlang der besagten zweidimensionalen Fläche in einem Bereich von 9:1 bis 7:3 liegt.

3. Kohlenstofffaserverstärktes siliciumkarbidbasiertes Verbundstoffmaterial gemäß Anspruch 1, wobei in einer Oberflächenschicht zwischen mindestens 500 µm und maximal 4000 µm Tiefe von der Oberfläche, ein Gesamtgehalt von besagtem Silciumkarbid und dem Silciumkarbid, das aus der Silifizierung der geschnittenen Kohlenstofffasern und der anderen Kohlenstoffkomponente resultiert, 50 Gew.-% bis 80 Gew.-% beträgt.

## Revendications

1. Matériau composite à base de carbure de silicium renforcé par des fibres de carbone, comprenant un faisceau de fibres présentant des fibres de carbone coupées agencées en parallèle et l'autre composant de carbone, carbone, silicium et carbure de silicium, dans lequel
ledit faisceau de fibres est plat, sa section transversale perpendiculaire à sa direction longitudinale présente un diamètre plus grand de 1 mm ou plus, un rapport du diamètre plus grand sur le diamètre plus petit va de 1,5 à 5, une pluralité desdits faisceaux de fibres est orientée de manière aléatoire le long d'un plan bidimensionnel, et lesdits faisceaux de fibres peuvent inclure partiellement ceux dont les directions longitudinales s'inclinent dudit plan bidimensionnel dans une direction de la profondeur ou ceux qui sont incurvés,
lesdites fibres de carbone coupées présentent un diamètre allant de 7 µm à 15 µm et une longueur allant de 4 mm à 14 mm, et une distance entre les fibres de carbone coupées adjacentes va de 1 µm à 20 µm au niveau de la section transversale perpendiculaire à la direction longitudinale dudit faisceau de fibres, et
dans une section arbitraire perpendiculaire audit plan bidimensionnel, un rapport d'une zone occupée par lesdites fibres de carbone coupées sur la section va de 30 % à 45 %, un rapport d'une zone occupée par du carbure de silicium sur la section va de 40 % à 59 %, et le résidu est constitué de composants en silicium et en carbone différents desdites fibres de carbone coupées.

2. Matériau composite à base de carbure de silicium renforcé par des fibres de carbone selon la revendication 1, dans lequel ledit faisceau de fibres inclut un premier faisceau de fibres présentant une longueur allant de 4 mm à 8 mm et un second faisceau de fibres présentant une longueur allant de 10 mm à 14 mm, et un rapport de surface compris entre ledit premier faisceau de fibres et ledit second faisceau de fibres se situe dans une plage allant de 9:1 à 7:3 au niveau d'une section arbitraire le long dudit plan bidimensionnel.

3. Matériau composite à base de carbure de silicium renforcé par des fibres de carbone selon la revendication 1, dans lequel dans une couche superficielle comprise entre au moins 500 µm et maximum 4 000 µm en profondeur à partir de la surface, une teneur totale dudit carbure de silicium et le carbure de silicium résultant de la silicification des fibres de carbone coupées et de l'autre composant de carbone va de 50 % en poids à 80 % en poids.
